Europäisches Patentamt

European Patent Office

Office européen des brevets

(11) Publication number: **0 339 112 B1**

(12) **EUROPEAN PATENT SPECIFICATION**

(45) Date of publication of patent specification: **03.06.92**  (51) Int. Cl.⁵: **A23B 7/06**

(21) Application number: **88106791.2**

(22) Date of filing: **28.04.88**

(54) **Blanching process.**

(43) Date of publication of application:
**02.11.89 Bulletin 89/44**

(45) Publication of the grant of the patent:
**03.06.92 Bulletin 92/23**

(84) Designated Contracting States:
**BE CH DE FR GB IT LI SE**

(56) References cited:
**EP-A- 0 155 703
DE-A- 2 359 672
FR-A- 1 518 529
GB-A- 1 083 817**

(73) Proprietor: **FRISCO-FINDUS AG
Industriestrasse
CH-9400 Rorschach(CH)**

(72) Inventor: **Palsson, Karl-Erik
Klövergatan 22
S-267 00 Bjuv(SE)**

Rank Xerox (UK) Business Services

## Description

The present invention relates to a blanching process for potatoes.

The texture of frozen vegetables is usually inferior to that of fresh vegetables. In particular, the texture of frozen vegetables is seriously softened after cooking. This is especially so in the case of sliced potatoes which may be used, for instance, in potato gratins. In the normal one-step blanching process at 85°C for 4-5 minutes, the texture of the frozen sliced potatoes is undesirably soft after preparation. Sometimes calcium salts are added to the blanching medium in order to obtain a firmer texture but the use of such compounds is not desirable because they are not reliable and their effectiveness varies depending on the raw material and the storage period. Lower blanching temperatures lead to a frozen product with poor storage stability while prolonged blanching times lead to the leaching out of desirable flavours.

In Journal of Food Technology (1976), 11, 313-316, Technical Note: Improvement of texture of frozen vegetables by stepwise blanching treatments by E. Steinbuch, there is described a process of improving the firmness of green beans by a two-step blanching process involving a first step at 60-80°C for a period of from about 5-20 minutes followed by a second step at 98°C or in steam for about 3-4 minutes to inactivate those enzymes which are responsible for quality decrease during storage of the frozen product. However, it is stated that this process is only effective to a slight degree in broad beans and not at all in peas so it is clear that different vegetables behave in different and unpredictable ways.

DE-A-2 359 672 describes a process in which raw potato segments are blanched comprising first blanching the segments in hot water at 65.6 to 71.1°C for 12-25 minutes, cooling the segments and blanching a second time in hot water at 79.5 to 96.6°C for 2 to 6 minutes.

EP-A-6455 describes a two-step blanching process for vegetables comprising a first step at 90°-100°C in water or steam for a period of from 1-30 seconds and then a second step at 45°-90°C in water for a period of from 1-60 minutes. Although this process is highly satisfactory for green vegetables, blanching for long periods at high temperature on sliced potatoes leads to a frozen product which is undesirably soft after preparation while if the second blanching step is carried out at too low temperature, frozen sliced potatoes have poor storage stability.

We have now devised a two-step blanching process without an intermediate cooling step for potato pieces which gives a firm texture and a product which is stable on freeze storage.

Accordingly, the present invention provides a process for blanching potato pieces characterised in that the potato pieces are blanched in a first step at a temperature from 55°C to 70°C for a period of from 10 to 30 minutes in water followed immediately by a second step at a temperature from 80°C to 100°C for a period of from 30 seconds to 20 minutes in water or in steam.

Preferably, the first blanching step is carried out at a temperature from 60°C to 68°C for a period of from 12 to 25 minutes, and especially from 63°C to 67°C for a period of from 13 to 20 minutes. The second blanching step is preferably carried out at a temperature from 82°C to 95°C for a period of from 1 to 15 minutes, more preferably from 83°C to 90°C for a period of from 2 to 10 minutes and especially from 84°C to 86°C from 3 to 7 minutes.

It should be understood that, in the process of this invention, generally at the highest temperature of a range the shortest time is preferable and vice versa. In addition, the blanching time is preferably broadly directly proportional to the thickness of the potato pieces especially in the second blanching step.

In this invention there is substantially no holding time or chilling procedure between the first and second blanching step and preferably the time between the different blanching operations is as short as possible.

After the process of the present invention the potatoes are conveniently chilled in running tap water to about 20°C before being frozen, for instance, in a fluidised bed.

The potato pieces to be blanched by the process of this invention may be in the form of slices, dice, strips or julienne cuts. The may conveniently have a thickness of from 2 to 12 mm.

The potato pieces blanched by the process of this invention are stable during freeze storage, have an acceptable flavour and have an increased firmness without the necessity of adding calcium salts when compared with potato pieces blanched by conventional methods. By using the two-step blanching process according to the present invention, it is easy to stabilise the texture of the product. Variations in dry matter content of the raw material or in the rate of heating during preparation do not affect the texture of the product to the see degree as when the potatoes are blanched in the normal one-step blanching process.

After being frozen the potatoes, for instance, in the form of slices as ingredients in frozen gratins may be prepared for consumption by heating in an oven at 200°C for 50 to 55 minutes.

The potatoes blanched by the process of this invention may be stored in a deep-frozen condition for more than one year.

The following Example further illustrates the present invention.

Example 1

Potatoes were peeled and washed and cut into slices of 3-4 mm thickness. The slices were then blanched in two successive steps, firstly in water at 65°C for 15 minutes and immediately afterwards in water at 85°C for 5 minutes. The potato slices were then chilled in running tap water to 20°C and then frozen in a fluidised bed and stored at -30°C. The frozen slices were used in potato gratins.

After heating in an oven at 200°C for 55 minutes, the sliced potatoes had an excellent flavour.

Comparative Example A

A similar procedure to that described in Example 1 was followed except that the second blanching step was carried out at 75°C. The storage stability of the sliced potatoes was inferior to that of the sliced potatoes of Example 1.

Comparative Example B

A similar procedure to that described in Example 1 was followed except that the first blanching step was carried out at 80°C.

After heating in an oven at 200°C for 55 minutes the sliced potatoes had an undesirably soft texture.

Comparative Example C

A similar procedure to that described in Example 1 was followed except that the first blanching step was carried out for a period of only 8 minutes.

After heating in an oven at 200°C for 55 minutes the sliced potatoes had a softer texture than those of Example 1.

Comparative Example D

A similar procedure to that described in Example 1 was followed except that the first blanching step was carried out for 35 minutes.

After heating in an oven at 200°C for 55 minutes the flavour of the sliced potatoes was inferior to that of the sliced potatoes of Example 1.

Claims

1. A process for blanching potato pieces in two steps characterised in that the first step is carried out at a temperature from 55°C to 70°C for a period of from 10 to 30 minutes in water followed immediately by the second step which is carried out at a temperature from 80°C to 100°C for a period of from 30 seconds to 20 minutes in water or steam.

2. A process according to claim 1 characterised in that the first step is carried out at a temperature of from 60°C to 68°C for a period of from 12 to 25 minutes.

3. A process according to claim 1 characterised in that the second step is carried out at a temperature of from 82°C to 95°C for a period of from 1 to 15 minutes.

4. A process according to claim 1 characterised in that the potato pieces have a thickness of from 2 to 12 mm.

5. A process according to claim 1 characterised in that the blanching time is broadly directly proportional to the thickness of the potato pieces.

6. A process according to claim 1 characterised in that after the blanching process the potato pieces are frozen.

Revendications

1. Procédé pour blanchir des morceaux de pomme de terre en deux étapes, caractérisé en ce que la première étape est effectuée à une température de 55°C à 70°C pendant une période de 10 à 30 minutes dans de l'eau, suivie immédiatement par la seconde étape qui est effectuée à une température de 80°C à 100°C pendant une période de 30 secondes à 20 minutes dans de l'eau ou de la vapeur d'eau.

2. Procédé selon la revendication 1, caractérisé en ce que la première étape est effectuée à une température de 60°C à 68°C pendant une période de 12 à 25 minutes.

3. Procédé selon la revendication 1, caractérisé en ce que la seconde étape est effectuée à une température de 82°C à 95°C pendant une période 1 à 15 minutes.

4. Procédé selon la revendication 1, caractérisé en ce que les morceaux de pomme de terre ont une épaisseur de 2 à 12 mm.

5. Procédé selon la revendication 1, caractérisé en ce que le temps de blanchiment est largement directement proportionnel à l'épaisseur des morceaux de pomme de terre.

**6.** Procédé selon la revendication 1, caractérisé en ce que les pommes de terre sont congelées après le procédé de blanchiment.

**Patentansprüche**

**1.** Verfahren zum Blanchieren von Kartoffenstükken in zwei Stufen, dadurch gekennzeichnet, daß die erste Stufe bei einer Temperatur von 55°C bis 70°C für einen Zeitraum von 10 bis 30 min in Wasser durchgeführt wird und unmittelbar von der zweiten Stufe gefolgt wird, die bei einer Temperatur von 80°C bis 100°c für einen Zeitraum von 30 s bis 20 min in Wasser oder Dampf durchgeführt wird.

**2.** Verfahren nach Anspruch 1, dadurch gekennzeichnet, daß die erste Stufe bei einer Temperatur von 60°c bis 68°C für einen Zeitraum von 12 bis 25 min durchgeführt wird.

**3.** Verfahren nach Anspruch 1, dadurch gekennzeichnet, daß die zweite Stufe bei einer Temperatur von 82°C bis 95°C für einen Zeitraum von 1 bis 15 min durchgeführt wird.

**4.** Verfahren nach Anspruch 1, dadurch gekennzeichnet, daß die Kartoffelstücke eine Dicke von 2 bis 12 mm aufweisen.

**5.** Verfahren nach Anspruch 1, dadurch gekennzeichnet, daß die Blanchierzeit breit gesprochen direkt proportional zur Dicke der Kartoffelstücke ist.

**6.** Verfahren nach Anspruch 1, dadurch gekennzeichnet, daß nach dem Blanchierverfahren die Kartoffelstücke gefroren werden.